# EUROPEAN PATENT APPLICATION

(11) **EP 1 767 110 A1**
(43) Date of publication of application: **28.03.2007**
(21) Application number: 05747236.7
(22) Date of filing: 05.05.2005
(51) Int. Cl.: A43D 3/14

(54) **SHOE TREE WHICH IS INTENDED TO MAINTAIN THE STRUCTURE OF THE BODY OF A SHOE**

(30) Priority: 18.05.2004 ES 200401192
(71) Applicant: Diaz-Guerra Martin, Quintin, E-28925 Alcorcon (Madrid) (ES)
(72) Inventor: Diaz-Guerra Martin, Quintin, E-28925 Alcorcon (Madrid) (ES)
(74) Representative: Lorente Berges, Ana
(86) International application number: PCT/ES2005/000242
(87) International publication number: WO 2005/110141

(57) **Abstract**

The invention relates to a shoe tree which is intended to maintain the structure of the body of a shoe. The inventive shoe tree comprises one blow-moulded part (1) and one injection-moulded part (4), both of which are made from plastic The two parts are clamped together using lugs (7 and 7') which project out from one end of the injection -moulded part (4) and which are fixed to the blow moulded part (1) by means of recesses (3 and 3') which are provided on the inner faces of flanges (2 and 2') that extend from said part (1). In addition, the injection-moulded part (4) is equipped with a curved vertical extension (10) comprising a stiffening rib (11).

## Description

### OBJECT OF THE INVENTION

The present descriptive report refers to an application for an invention Patent referring to a shoe tree intended to maintain the structure of the body of a shoe, the purpose of which lies in being configured from a body of blow-moulded hollow plastic material, which is attached on the inner part of the shoe matching up with the toe cap and the upper, to which there is clamped a second one-piece part produced by injection moulding or any other method that generates the fastening of both parts to each other inside the shoe, while the complementary clamped part has a central area forming a fold which enables it to be used in multiple sizing.

### FIELD OF THE INVENTION

This invention has its application in the industry engaged in the manufacture of shoe trees and ancillary items for maintaining products of this type.

### BACKGROUND OF THE INVENTION

The applicant is aware of the existence at this time of a large number of shoe trees and elements for the upkeep of footwear produced from blow-moulded plastic material bodies, provided with a central bellows-type fold that enables them to be used in multiple sizing, even including hollows for the insertion of odorizing pellets.

The applicant is also aware of the conventional use by footwear manufacturers of elongated wooden pieces which are supported at one end of the shoe on a folded piece of paper and at the opposite end or heel on another folded piece of paper, thereby achieving the maintenance of the body of the shoe during the distribution and marketing stage and preventing it from being put out of shape.

The applicant is also aware of the use of wooden pieces taking the form of one end applicable in the area corresponding to the toe cap of the shoe and, at the other, a part, also made from wood, which is engaged with the inner part of the heel Inside the shoe, both being joined together by a flat strip which prevents the shoe from being put out of shape.

In the first and third case, it is confirmed that the use of elements of this type entails a high implicit cost, which means that they are not used by the companies engaged in manufacturing footwear since they raise the overall cost of the product considerably.

In the second case, when a wooden piece resting on folded pieces of paper is used, this involves the employment of labour engaged in inserting support elements of this type, which also results in an increase in the and cost of the product to be distributed.

The obvious answer to the problem existing at this time in this respect would be that of being able to make use of a low cost shoe tree which would permit the insertion of the protection element in the shoe in a simplified fashion and which could be re-used after being removed when the shoe is put to its normal use.

The applicant, however, is unaware of the existence at the present time of an invention offering similar features to those that are described in this report.

### DESCRIPTION OF THE INVENTION

The shoe tree which is intended to maintain the structure of the body of the shoe put forward by the invention manages to maintain successfully the body of a shoe into which it is introduced or inserted and, at the same time, it is so designed as to enable it to be refitted subsequently to its conventional use, thus maintaining the shoe in suitable conditions.

More specifically, the shoe tree which is intended to maintain the structure of the body of the shoe that is the object of the invention is made up of two parts, one, internally hollow, made from blow-moulded plastic material, which takes on the general form of the toe cap and adjacent body of the shoe, which incorporates at one of its ends, to be more precise that opposite to the too cap end, two lines of vertical and parallel reinforcement, each provided with matching perforations into which are inserted the ends projecting towards the exterior of a part made by injection-moulding or any other sensibly elongated method, which is provided with a longitudinal recess at the end matching up with the clamping end and is fitted in the middle portion of the heel connecting piece with a fold, generating from it the possibility of being applied in multiple sizes, while incorporating at the inner end in line with the heel a stiffening flange or rib which prevents the shoe in which it is fitted from being put out of shape.

Accordingly, as the two parts forming the toe cap and upper and the retaining area on the heel are joined together, we succeed in obtaining a shoe tree that maintains the shoe in suitable conditions right from its manufacture, through the marketing or distribution stage, to the later maintenance of the shoe once purchased by the consumer and subsequent to its use.

### DESCRIPTION OF THE DRAWINGS

To supplement the description that is being given and in order to assist in a clearer understanding of the features of the invention, in accordance with a preferred practical embodiment of same, a set of drawings is adjoined as an integral part of said description, wherein there is represented on an informative and non-restrictive basis the following:
Figure number 1.- It represents a perspective view from the upper area of the blow-moulded part, which is inserted into the inside of the shoe and is abutted against the toe cap and upper area corresponding to the object of the invention relating to a shoe tree which is intended to maintain the structure of the body of a shoe.
Figure number 2.- It shows the object represented in figure number 1 from the face designed for clamping to the part that generates the fastening in the interior of the shoe proper.
Figure number 3.- It illustrates a perspective view of the complementary part which is clamped to the object shown in figures number 1 and 2.

### PREFFERED EMBODIMENT OF THE INVENTION

In the light of these figures it may be observed how the shoe tree which is intended to maintain the structure of the body of the shoe is made up of parts (1) and (4), part (1) being an internally hollow blow moulding in a plastic material, which is provided, in alignment with its rear face opposite to the end abutting on the toe cap, with two vertical, parallelly oriented flanges (2) and (2') which incorporate in each of their inner opposed faces recesses in which flanges or lugs (7) and (7') are coupled, projecting from one of the ends of the part (4), made either of injection moulded plastic or by any other method, which has a front portion (5) provided with a longitudinal groove (6), located at the outer ends of which are lugs or flanges (7) and (7') intended for engagement in the recesses (3) and (3') or coupling areas built into the body (1).

To the rear of the area (5) in the body (4) there is a fold (8) provided. By virtue of its bellows-like fold action as such, it generates the possibility that this part (4) may be fitted in shoes of different sizes. To the rear of the fold (8) it has an area (9) at the end of which there is a curved extension (10) intended to be engaged on its inner side with the heel portion of the shoe, said extension (10) being stiffened by a rectangular flange (11) which is secured to extension (10) by its inner face and to area (9) by its underside.

When parts (1) and (4) have been joined together, they may be inserted into a shoe, maintaining it in suitable conditions both during its distribution or marketing and subsequent to its use.

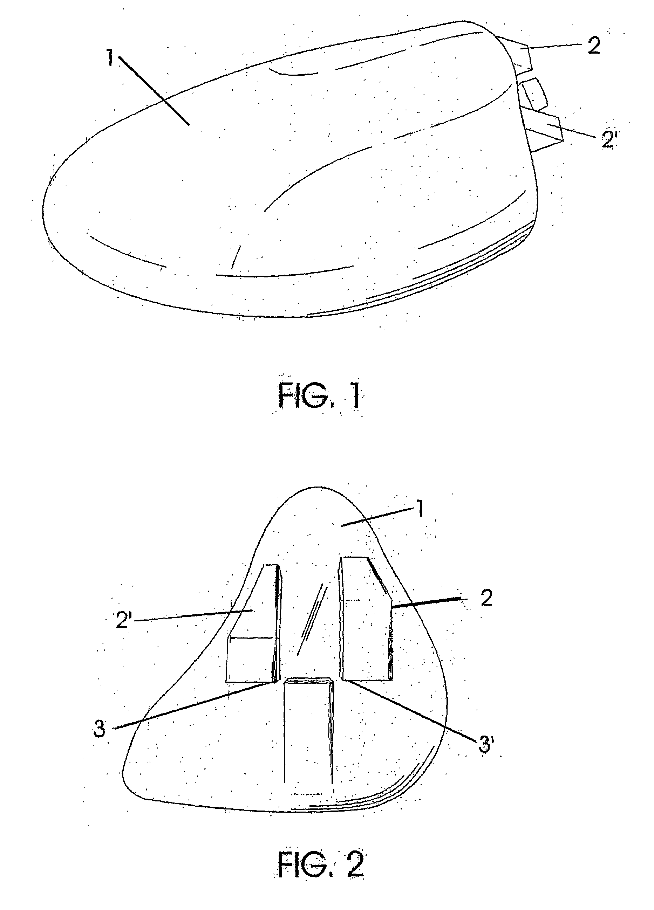

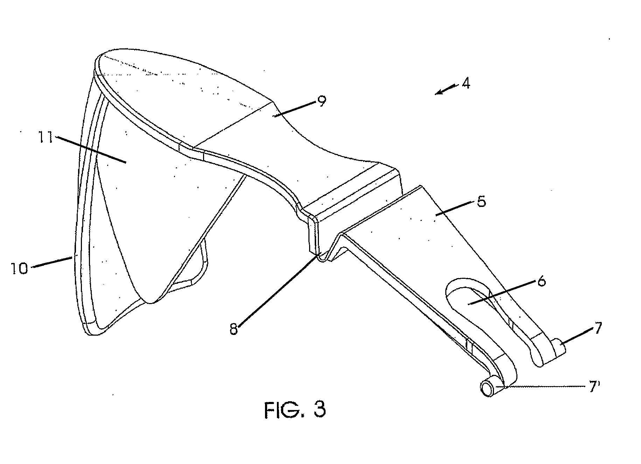

## Claims

1. A shoe tree which is Intended to maintain the structure of the body of the shoe, **characterised in that** it is composed of a hollow plastic material blow moulding and a plastic material part (4) made by injection moulding or any other method, the aforesaid part (1) being provided on the face opposite the toe cap or narrower area with two vertical flanges (2) and (2') which incorporate in their inner faces opposing recesses (3) and (3'), wherein are clamped pins or lugs (7) and (7') protruding from one end of the part (4), the aforesaid part (4) having an area (5) provided with a longitudinal groove (6) from the outside of the ends of which there project flanges or lugs (7) and (7'), said part (4) being endowed to the rear of the portion (5) with a fold (8) followed by a flat area (9).

2. A shoe tree which is intended to maintain the structure of the body of the shoe, as defined in claim 1, **characterised in that** at the end of part (9) opposite the end provided with the flanges or lugs (7) and (7') there is a vertical extension (10) with a curving surface for attachment to the inner surface of the heel area of the shoe, fitted with a stiffener (11) on its inner face, while in its upper area said stiffener (11) is fastened to the lower face of the portion (9).
